# EUROPÄISCHE PATENTSCHRIFT

(11) **EP 2 442 989 B1**
(45) Veröffentlichungstag und Bekanntmachung des Hinweises auf die Patenterteilung: **25.03.2015**
(21) Anmeldenummer: 10728573.6
(22) Anmeldetag: 21.05.2010
(51) Int. Cl.: B60D 1/28, B60D 1/52, B60D 1/58, B60D 1/06

(54) **ANHÄNGERKUPPLUNG**
TRAILER COUPLING
ATTELAGE DE REMORQUE

(30) Priorität: 16.06.2009 AT 9242009
(43) Veröffentlichungstag der Anmeldung: 25.04.2012
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte OG
(86) Internationale Anmeldenummer: PCT/AT2010/000180
(87) Internationale Veröffentlichungsnummer: WO 2010/144927

(56) Entgegenhaltungen:
- EP-A1- 1 559 592
- WO-A1-2007/093069
- DE-B3-102005 026 273
- DE-U- 1 845 701
- DE-U1- 20 003 480
- US-A- 5 290 057
- US-A1- 2005 040 623
- US-B1- 6 203 050

## Beschreibung

Die Erfindung betrifft eine Anhängerkupplung gemäß dem Oberbegriff des Patentanspruches 1. Die Anhängerkupplung ist - gemeinsam mit einem anhängerseitigen Kupplungselement - zur Ausbildung einer kuppelbaren Zugvorrichtung vorgesehen. Die Anhängerkupplung ist der zugfahrzeugseitige Teil und das anhängerseitige Kupplungselement der anhängerseitige Teil der Zugvorrichtung.

Bekannte Anhängerkupplungen umfassen die Kupplungskugel. Die Anhängerkupplung wird am Zugfahrzeug montiert, beispielsweise angeschraubt. Relativ zum Zugfahrzeug ist die Kupplungskugel lagefest. Zum Kuppeln des Anhängers am Zugfahrzeug wird eine Kugelzugöse eines anhängerseitigen Kupplungselements, beispielsweise einer Zugstange, auf die Kupplungskugel aufgesetzt. Oftmals wird die angekuppelte Kugelzugöse, welche im Wesentlichen die Form einer Kugelschale umfassen kann, mittels eines Niederhaltes in der eingekuppelten Position niedergehalten, sodass ein Abspringen der Kugelzugöse von der Kupplungskugel verhindert ist.

Bekannte Zugfahrzeuge sind zum Ankuppeln unterschiedlicher Anhänger und sonstiger Arbeits- bzw. Transportgeräte ausgelegt. Da die Platzverhältnisse am anhängerseitigen Ende des Zugfahrzeuges begrenzt sind, ist die bauraumschonende Ausbildung der Anhängerkupplung wünschenswert. Eine gattungsgemäße Anhängerkupplung ist in Dokument US 2005/0040623 A1 gezeigt.

Arbeitsgeräte werden zunehmen großer und Zugmaschinen werden zunehmend stärker, sodass - zur effizienten Bewirtschaftung beispielsweise von Äckern - bekannte Anhängerkupplungen mit immer höheren Kräften belastet werden. Oftmals sind bekannte Anhängerkupplungen zu verstärken, also mit mehr Material und größer, auszubilden, womit sich in nachteiliger Weise das Eigengewicht und der Raumbedarf der bekannten Anhängerkupplung vergrößern. Nachteilig dabei kann weiters sein, dass bei dieser Verstärkung der Anhängerkupplung der maximal mögliche Schwenkwinkel zwischen der Anhängerkupplung und dem anhängerseitigen Kupplungselement verringert wird und gegebenenfalls ein gesetzlich geforderter Mindestschwenkwinkel, beispielsweise 20°, kaum erreicht wird.

Aufgabe der Erfindung ist es daher eine Anhängerkupplung der eingangs genannten Art anzugeben, welche hohen Kräftebelastungen standhält, einen geringen Bauraumbedarf aufweist, gewichtsschonend ausbildbar ist und welche große Schwenkwinkel gewährleisten kann.

Erfindungsgemäß wird dies durch die Merkmale des Patentanspruches 1 erreicht.

Dadurch ergibt sich der Vorteil, dass der Hals große Kräfte übertragen kann und die Anhängerkupplung dennoch gewichtsschonend ausgebildet werden kann. Dadurch ergibt sich der Vorteil, dass ein großer Schwenkwinkel gewährleistet werden kann. Dadurch ergibt sich der Vorteil, dass die Anhängerkupplung bauraumschonend, also platzsparend, ausgebildet werden kann.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 die Anhängerkupplung einer besonders bevorzugten ersten Ausführungsform in Seitenansicht in Blickrichtung in die zweite Richtung;
Fig. 2 die Anhängerkupplung der Fig. 1 in Frontsicht in Blickrichtung in die erste Richtung;
Fig. 3 die Anhängerkupplung der Fig. 1 in Aufsicht in Blickrichtung entgegen der dritten Richtung;
Fig. 4 die Anhängerkupplung der Fig. 1 im Schnitt A-A, wie dieser in Fig. 3 eingezeichnet ist;
Fig. 5 die Kupplungskugel und den Hals geschnitten im Schnitt B-B, wie dieser in Fig. 1 und 4 eingezeichnet ist;
Fig. 6 die Kupplungskugel und den Hals geschnitten einer Anhängerkupplung einer vorteilhaften zweiten Ausführungsform in Ansicht gemäß dem Schnitt B-B der Fig. 5;
Fig. 7 in axonometrischer, eingekuppelter Ansicht die Anhängerkupplung der Fig. 1, ein Halterungsmodul eines Niederhalters und ein anhängerseitiges Kupplungselement;
Fig. 8 die Anhängerkupplung der Fig. 1 und eine Halterung des Niederhalters in Seitenansicht in Blickrichtung in die zweite Richtung;
Fig. 9 die Elemente der Fig. 8 in axonometrischer Darstellung;
Fig. 10 die Anhängerkupplung der Fig. 1 und das Halterungsmodul des Niederhalters in Seitenansicht in Blickrichtung in die zweite Richtung;
Fig. 11 die Elemente der Fig. 10 in axonometrischer Darstellung;

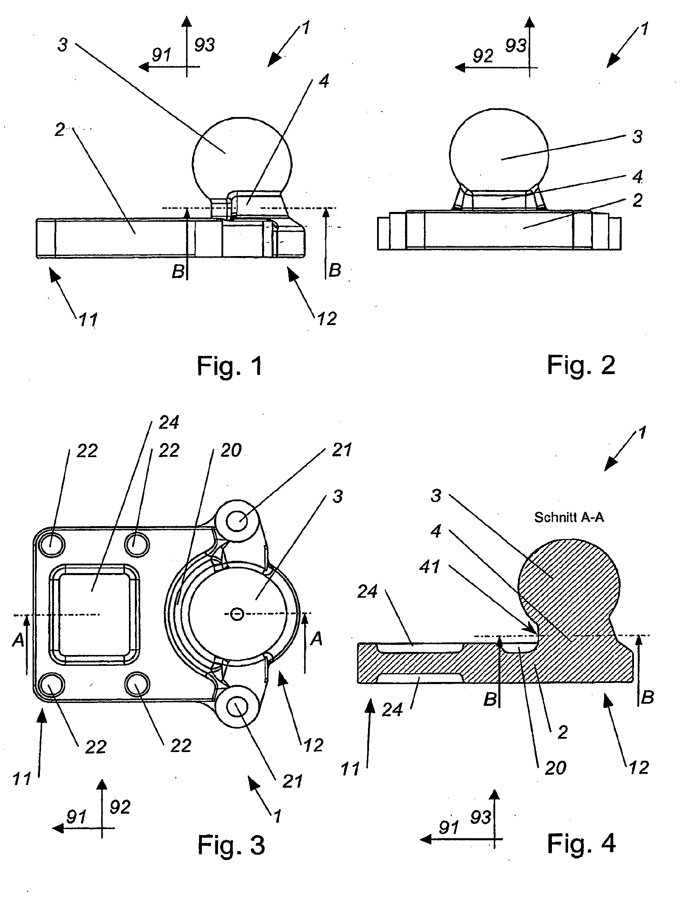

Die Fig. 1 bis 11 zeigen zwei vorteilhafte Ausführungsformen einer Anhängerkupplung 1 zur Befestigung an einem Zugfahrzeug mit einer Flanschplatte 2 und einer Kupplungskügel 3, wobei ein die Flanschplatte 2 und die Kupplungskugel 3 verbindender Hals 4 ausgebildet ist. Zur hohen Kraftbelastbarkeit, zum geringen Bauraumbedarf und zur gewichtsschonenden Ausbildbarkeit der Anhängerkupplung 1 sowie zur Gewährleistbarkeit großer Schwenkwinkel zwischen der Anhängerkupplung 1 und einem anhängerseitigen Kupplungselement 8 wird vorgeschlagen, dass die maximale Erstreckung des Halses 4 in einer ersten Richtung 91 kleiner als in einer zur ersten Richtung 91 normalen zweiten Richtung 92 ist. Gleichwertig dazu ist, dass die maximale Erstreckung des Halses 4 in der zweiten Richtung 92 größer als in der zur zweiten Richtung 92 normalen ersten Richtung 91 ist.

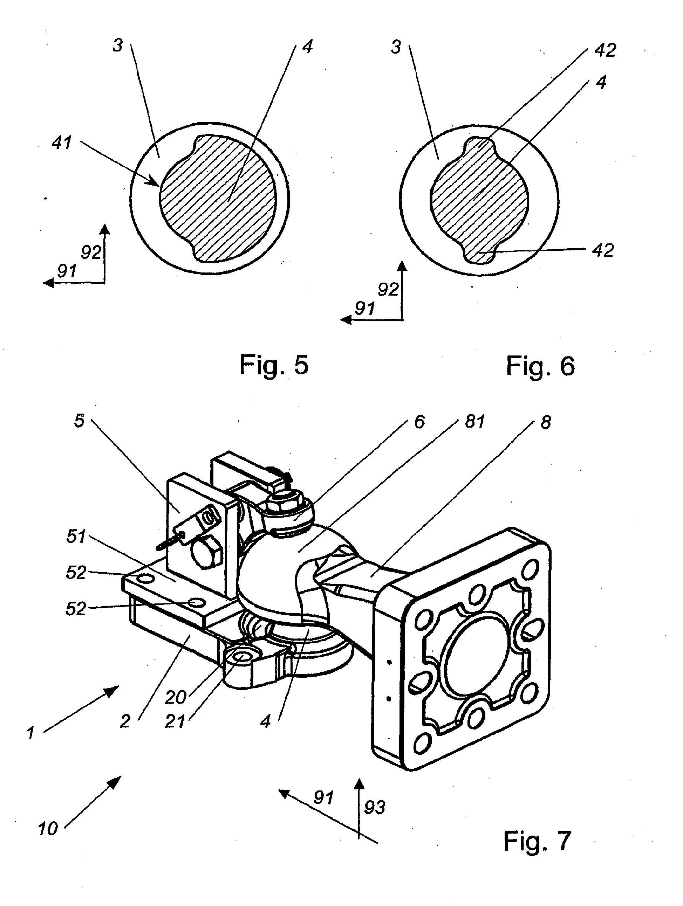

Fig. 1 bis 5 und 7 bis 11 zeigen eine besonders bevorzugte erste Ausführungsform der Anhängerkupplung 1. Fig. 6 zeigt Teile einer vorteilhaften zweiten Ausführungsform der Anhängerkupplung 1. Die Kupplungskugel 3 der in den Fig. dargestellten Ausführungsformen der Anhängerkupplung 1 hat denselben Durchmesser.

Fig. 7 zeigt weiters die Anhängerkupplung 1 mit angekuppeltem anhängerseitigen Kupplungselement 8, welches eine Kugelzugöse 81 umfasst. Die Kugelzugöse 81 weist einen kugelpfannenförmigen Bereich auf, welcher zum Aufsetzten auf die Kupplungskugel 3 vorgesehen ist. Der kugelpfannenförmige Bereich kann als Kugelschale bezeichnet werden. Das anhängerseitige Kupplungselement 8 kann insbesondere als Zugelement, bevorzugt als Zugstange, ausgebildet sein. Die Anhängerkupplung 1 mit dem angekuppelten anhängerseitigen Kupplungselement 8 bilden eine Zugvorrichtung 10 aus. Die Anhängerkupplung 1 und das angekuppelte anhängerseitige Kupplungselement 8 sind in Fig. 7 in einer Geradeausstellung dargestellt, in welcher Geradeausstellung die Längsrichtung des anhängerseitigen Kupplungselements 8 im Wesentlichen parallel zur ersten Richtung 91 gerichtet ist. In der Geradeausstellung beträgt der Schwenkwinkel zwischen der Anhängerkupplung 1 dem anhängerseitigen Kupplungselement 8 null Grad, also 0°. In der Geradeausstellung beträgt auch ein Lenkwinkel zwischen der Anhängerkupplung 1 dem anhängerseitigen Kupplungselement 8 0°.

Der Schwenkwinkel wird beim 0° betragenden Lenkwinkel gemessen und ist jener Winkel, um welchen das anhängerseitige Zugelement in einer von der ersten Richtung 91 und einer dritten Richtung 93 aufgespannten ersten Ebene um die Kupplungskugel 3 verschwenkbar ist. Der Lenkwinkel wird beim Schwenkwinkel von 0° gemessen und ist jener Winkel, um welchen die das anhängerseitige Zugelement in einer von der ersten Richtung 91 und der zweiten Richtung 92 aufgespannten zweiten Ebene um die Kupplungskugel 3 verdrehbar ist. In Gebrauchslage, also insbesondere in der an einem Zugfahrzeug montierten Lage, der Anhängerkupplung 1 können die erste Ebene vertikal und die zweite Ebene horizontal angeordnet sein.

Die Anhängerkupplung 1 ist zur Montage am Zugfahrzeug vorgesehen. Bei montierter Anhängerkupplung 1 ist das Zugfahrzeug mit der Anhängerkupplung 1 ausgebildet. Das Zugfahrzeug kann auch als Schlepper bezeichnet werden und kann insbesondere als handelsüblicher Traktor ausgebildet sein. Die Anhängerkupplung 1 ist weiters zum Ankuppeln eines Anhängers am Zugfahrzeug vorgesehen. Bei angekuppeltem Anhänger können Zugfahrzeug mit der Anhängerkupplung 1 und der Anhänger ein, insbesondere landwirtschaftliches, Zuggespann ausbilden. Da der Hals 4 zur Übertragung besonders großer Kräfte parallel zur ersten Richtung 91 ausgebildet ist, so eignet sich die Anhängerkupplung 1 in vorteilhafter Weise besonders zum Ziehen von, insbesondere landwirtschaftlichen, Bodenbearbeitungsgeräten, beispielsweise zum Ziehen eines Pfluges, einer Egge oder eines Grubbers. Bei der Bodenbearbeitung treten besonders hohe Kräfte parallel zur ersten Richtung 91 auf.

In der Betriebslage der Anhängerkupplung 1 kann vorgesehen sein, dass die erste Richtung 91 mit der Längsrichtung, des Zugfahrzeuges, insbesondere des Zuggespannes, zusammenfällt. Beim Geradeauslauf des Zuggespannes, also des Zugfahrzeuges mit angekuppeltem Anhänger, sind dabei die Längsrichtungen von Zugfahrzeug und Anhänger in etwa parallel zur ersten Richtung 91. Die zweite Richtung 92 kann in der Betriebslage der Anhängerkupplung 1 der Querrichtung des Zugfahrzeuges entsprechen, also im Wesentlichen parallel zur Hinterachse des Zugfahrzeuges gerichtet sein.

Entlang der ersten Richtung 91 kann die Länge der Anhängerkupplung 1 gemessen werden. Die erste Richtung 91 kann als Längsrichtung der Anhängerkupplung bezeichnet werden. Entlang der zweiten Richtung 92 kann die Breite der Anhängerkupplung 1 gemessen werden. Die zweite Richtung 92 kann als Querrichtung der Anhängerkupplung bezeichnet werden. Die Anhängerkupplung 1 kann eine Symmetrieebene aufweisen, um welche die Anhängerkupplung 1 in vorteilhafter Weise spiegelsymmetrisch ausgebildet sein kann. Die Fig. 4 zeigt die Anhängerkupplung 1 geschnitten, wobei die Schnittebene und die Symmetrieebene der Anhängerkupplung 1 zusammenfallen. In diesem Zusammenhang ist vorgesehen, dass die Kupplungskugel 3 symmetrisch in der Symmetrieebene angeordnet ist, wobei die Längsachse des Halses 4 in der Symmetrieebene angeordnet ist.

Insbesondere kann die Längsachse des Halses 4 mit der dritten Richtung 93 zusammenfallen, in welche dritte Richtung 93 die Höhe der Anhängerkupplung 1 gemessen werden kann. Wenn das Zugfahrzeug das angekuppelte Arbeitsgerät, insbesondere der Anhänger, in Fahrtrichtung, insbesondere in Geradeausrichtung, nach vorne zieht, dann wirken auf die Kupplungskugel 3 im Wesentlichen parallel zur Fahrtrichtung gerichtete Zugkräfte, welche insbesondere Zugkräfte bei einem Lenkwinkel und einem Schwenkwinkel von jeweils 0° insbesondere parallel zur ersten Richtung 91 gerichtet sein können. Die erste Richtung 91 kann insbesondere zur gleichgerichteten Anordnung wie die Längsachse des Zugfahrzeuges vorgesehen sein.

Die Anhängerkupplung 1 weist ein in Richtung der ersten Richtung 91 weisendes erstes Ende 11 der Anhängerkupplung 1 und ein entgegen der ersten Richtung 91 weisendes zweites Ende 12 der Anhängerkupplung 1 auf. Das zweite Ende 12 kann in der Betriebslage der Anhängerkupplung 1 vom Zugfährzeug weggerichtet sein. Um große Schwenkwinkel und große Lenkwinkel der Anhängerkupplung 1 zu gewährleisten, kann insbesondere vorgesehen sein, dass die Kupplungskugel 3 im Bereich des zweiten Endes 12 der Anhängerkupplung 1 angeordnet ist. In diesem Sinne können das erste Ende 11 als zugfahrzeugseitiges Ende der Anhängerkupplung 1 und das zweite Ende 12 als anhängerseitiges Ende der Anhängerkupplung 1 bezeichnet werden.

Vorteilhaft bei der erfindungsgemäßen Ausbildung des Halses 4 ist, dass der Hals 4 besonders kurz, also mit geringer Halslänge, ausgebildet werden kann und dennoch ein großer Schwenkwinkel der Anhängerkupplung 1, insbesondere der Zugvorrichtung, beispielsweise deutlich größer als 20°, gewährleistet werden kann. Insbesondere kann auch ein großer Lenkwinkel der Anhängerkupplung 1, insbesondere der Zugvorrichtung, gewährleistet werden.

Vorteilhaft dabei ist, dass zwischen der Anhängerkupplung 1 und der Kugelzugöse 81 des anhängerseitigen Kupplungselements 8 hohe Zugkräfte bei geringen Biegekräften im Hals 4 übertragen werden können. Vorteilhaft dabei ist, dass die Anhängerkupplung 1 mit besonders hohen Zugkräften belastbar ist.

Vorteilhaft an einem derart kurzen Hals 4 ist weiters, dass die Anhängerkupplung 1 besonders bauraumschonend ausgebildet sein kann, womit die Anhängerkupplung 1 am anhängerseitigen Ende des Zugfahrzeuges bauraumeffizient montierbar ist.

Vorteilhaft ist insbesondere, dass die Anhängerkupplung 1 auch gewichtsschonend ausgebildet werden kann. Zusätzliches Material, beispielsweise zur bereichsweisen Verbreiterung des Halses 4, kann insbesondere durch die kurze Halslänge des Halses 4 eingespart werden, womit die Anhängerkupplung 1 sogar ein geringeres Gewicht als herkömmliche Anhängerkupplungen aufweisen kann.

In vorteilhafter Weiterbildung kann vorgesehen sein, dass der Querschnitt des Halses 4 im Wesentlichen einem Kreisquerschnitt entspricht, bei dem ein Stück weggeschnitten ist. Diese Geometrie des Halses ist in Fig. 1, 2, 4,5, 8 und 10 dargestellt und ist insbesondere in Fig. 5 besonders deutlich sichtbar.

In diesem Zusammenhang kann vorgesehen sein, dass das weggeschnittene Stück des Kreisquerschnittes am in die erste Richtung 91 weisenden Rand 41 des Halses 4 angeordnet ist, wie dies ebenfalls bei der ersten Ausführungsform der Anhängerkupplung 1 vorgesehen ist. Vorteilhaft daran ist, dass der Schwenkwinkel nach oben hin, also wenn das anhängerseitige Zugelement 8 nach oben geschwenkt wird, besonders groß, beispielsweise über 30°, sein kann. Am in die erste Richtung 91 weisenden Rand 41 des Halses 4 ist die Außenfläche des Halses zumindest bereichsweise im Wesentlichen in die erste Richtung 91 gerichtet.

Wie beispielsweise bei der zweiten Ausführungsform der Anhängerkupplung 1 vorgesehen, kann in vorteilhafter Ausbildung der Erfindung vorgesehen sein, dass der Querschnitt des Halses 4 im Wesentlichen einem Kreisquerschnitt entspricht, bei dem in der zweiten Richtung 92 Anformungen 42 ausgebildet sind. Diese vorteilhafte Geometrie des Halses 4 ist in Fig. 6 dargestellt. Vorteilhaft dabei ist, dass der Schwenkwinkel nach oben und nach unten hin besonders groß, beispielsweise über 30°, sein kann.

Die Halslänge erstreckt sich zwischen der Kupplungskugel 3 und der Flanschplatte 2. Die Halslänge erstreckt sich vom Übergang der kegelförmigen Oberfläche der Kupplungskugel 3 auf den Hals 4 bis zum Übergang des Halses 4 auf die Flanschplatte 2. Die Übergänge können abgerundet ausgebildet sein. Dabei erstreckt ich die Halslänge bis jeweils in etwa der Mitte der abgerundeten Übergänge. In besonders vorteilhafter Weise kann vorgesehen sein, dass die Halslänge geringer als der Durchmesser, insbesondere geringer als der Radius, der Kupplungskugel 3 ist. In besonders vorteilhafter Weise kann vorgesehen sein, dass die Halslänge kleiner als das 0,6-fache, insbesondere das 0,4-fache, bevorzugt das 0,3-fache, des Durchmessers der Kupplungskugel 3 ist. Je kürzer dabei die Halslänge, desto größere Kräfte können bei gleichbleibender Querschnittsgeometrie des Halses 4 von der Kupplungskugel 3 auf die Flanschplatte 2 übertragen werden.

Der Hals 4 kann in vorteilhafter Weise in etwa normal von der Flanschplatte 2 abragen. Der Hals 4 kann insbesondere in etwa geradlinig ausgebildet sein. Insbesondere kann vorgesehen sein, dass der Hals 4 lediglich entlang einer dritten Richtung 93 ausgebildet ist, wobei die dritte Richtung 93 sowohl auf die erste Richtung 91 als auch auf die zweite Richtung 92 normal gerichtet ist. In vorteilhafter Weise kann hiebei vorgesehen sein, dass die Flanschplatte 2 in der zweiten Ebene liegt.

Insbesondere kann - wie in Fig. 1, 2, 4 und 8 bis 11 dargestellt - vorgesehen sein, dass die Halsaußenfläche bereichsweise im Wesentlichen parallel zur dritten Richtung 93 und bereichsweise geneigt zur dritten Richtung 93 ist. Insbesondere können die Halsaußenfläche der Anformungen 42 zumindest bereichsweise geneigt zur dritten Richtung 93 sein. Insbesondere kann die Halsaußenfläche im Bereich des ausgeschnittenen Stückes des Kreisquerschnittes zumindest bereichsweise im Wesentlichen parallel zur dritten Richtung 93 sein.

In vorteilhafter Weiterbildung kann vorgesehen sein, dass der Querschnittsfläche des Halses 4 von der Flanschplatte 2 in Richtung der Kupplungskugel 3, insbesondere entlang der dritten Richtung 93, im Wesentlichen stetig abnimmt. Vorteilhaft hiebei ist, dass sowohl der Lenkwinkel als auch der Schwenkwinkel groß ausgebildet sein können, insbesondere dass auch bei großem Lenkwinkel ein großer Schwenkwinkel gewährleistet sein kann.

In vorteilhafter Weiterbildung kann vorgesehen sein, dass die Kupplungskugel 3 und der Hals 4 als Gusswerkstoff, insbesondere als Stahlgusswerkstoff, einstückig ausgebildet sind, wozu die Kupplungskugel 3 und der Hals 4 einstückig gegossen werden können. Derart können die Kupplungskugel 3 und der Hals 4 besonders hohe Kräfte aufnehmen und diese besonders zuverlässig weiterleiten.

Besonders bevorzugt kann vorgesehen sein, dass die Flanschplatte 2, der Hals 4 und die Kupplungskugel 3 einstückig ausgebildet sind. Insbesondere kann in diesem Zusammenhang vorgesehen sein, dass die Flanschplatte 2, der Hals 4 und die Kupplungskugel 3 einstückig als Gusswerkstoff gegossen, insbesondere als Stahlgusswerkstoff gegossen, sind, womit die Anhängerkupplung 1 aus einem Gusswerkstoff, insbesondere aus einem Stahlgusswerkstoff, ausgebildet sein kann. Derart kann die Geometrie des Halses 4 besonders exakt vorbestimmt sein und der Hals 4 kann zuverlässig besonders hohe Kräfte übertragen.

In anderer vorteilhafter Weiterbildung kann vorgesehen sein, dass die Kupplungskugel 3 und der Hals 4 einstückig als Kupplungskugeleinheit ausgebildet sind und dass Kupplungskugeleinheit und die Flanschplatte 2 mehrstückig, insbesondere zweistückig, ausgebildet sind und dass die Kupplungskugeleinheit fest mit der Flanschplatte 2 verbunden wird, insbesondere angeschraubt wird. Vorteilhaft dabei ist, dass unterschiedliche Kupplungskugeleinheiten an dieselbe Flanschplatte 2 anbringbar sind, wobei zumindest der Durchmesser der unterschiedlichen Kupplungskugeln 3 der unterschiedlichen Kupplungskugeleinheiten zueinander verscheiden sein kann.

In diesem Zusammenhang kann vorgesehen sein, dass die Flanschplatte 2 ein erstes Lagefixiermittel und der Hals 4 ein zweites Lagefixiermittel aufweist, und dass das erste Lagefixiermittel und das zweite Lagefixiermittel bei der Fixierung des Halses 4 an der Flanschplatte 2 ineinandergreifen. Derart kann einfach gewährleistet werden, dass Hals 4 und Kupplungskugel 3 auch in bei zwei- oder mehrstückiger Ausbildung der Anhängerkupplung 1 in vorbestimmbarer Lage anordenbar sind, welches von Vorteil ist, da der Halsquerschnitt - wie vorstehend beschrieben - von der Kreisform abweichend ausgebildet ist. Insbesondere kann vorgesehen sein, dass das erste Lagefixiermittel und das zweite Lagefixiermittel derart ausgebildet sind, dass lediglich eine Montagestellung des Halses 4 an der Flanschplatte 2 möglich ist. Insbesondere kann vorgesehen sein, dass das erste Lagefixiermittel als Nut ausgebildet ist. Insbesondere kann vorgesehen sein, dass das zweite Lagefixiermittel Fortsatz, insbesondere als fortsatzförmige Feder, ausgebildet ist. Derart kann der Fortsatz am Hals in die Nut der Flanschplatte 2 eingreifen, womit der Hals 4 gegenüber der Flanschplatte 2 verdrehfest und in vorbestimmbarer Lage anordenbar ist.

Der Halsquerschnitt, als der Querschnitt des Halses 4, kann insbesondere parallel zur Flanschplatte 2 ausgebildet sein.

Der Halsquerschnitt, als der Querschnitt des Halses 4, kann insbesondere im Wesentlichen normal zur Längsachse des Halses 4 sein. Die Längsachse des Halses verläuft durch den Mittelpunkt der Kupplungskugel 3 und kann insbesondere im Wesentlichen normal auf die Flanschplatte 2 stehen.

In vorteilhafter Weiterbildung der Anhängerkupplung 1 kann vorgesehen sein, dass die Flanschplatte 2 benachbart zum Hals 4 eine Vertiefung 20 aufweist, wobei die Vertiefung 20 die Verkippbarkeit einer auf die Kupplungskugel 3 aufgesetzten Kugelzugöse 81 des anhängerseitigen Kupplungselements 8 vergrößert. Diese Vertiefung 20 ist bei der dargestellten ersten Ausführungsform der Anhängerkupplung 1 ausgebildet. Durch die Vertiefung 20 ist die Halslänge bereichsweise vergrößert, wobei die Halslänge entlang des Umfangs des Halses 4 variieren kann. Der Hals 4 kann dabei eine mittlere Halslänge aufweisen, welche sich als Mittelwert der Halslänge entlang des Umfangs des Halses 4 ergibt. Die mittlere Halslänge kann in besonders vorteilhafter Weise kleiner als das 0,6-fache, insbesondere das 0,4-fache, bevorzugt das 0,3-fache, des Durchmessers der Kupplungskugel 3 sein. Die Vertiefung 20 ermöglicht einen besonders großen Schwenkwinkel nach oben, welcher beispielsweise deutlich über 30°, insbesondere in etwa 40°, betragen kann.

In vorteilhafter Weiterbildung kann vorgesehen sein, dass die Flanschplatte 2 in der zweiten Richtung 92 neben dem Hals 4 erste Befestigungsöffnungen 21 zum Zusammenwirken mit nicht über die Flanschplatte 2 in Richtung der Kupplungskugel 3 hinausragenden ersten Befestigungsmitteln aufweist. Die ersten Befestigungsöffnungen 21 können insbesondere bei der ersten und/oder zweiten Ausführungsform der Anhängerkupplung 1 ausgebildet sein. Vorteilhaft dabei ist, dass die Flanschplatte 2 unmittelbar benachbart zum Hals 4 mittels der ersten Befestigungsmittel befestigt werden kann. Vorteilhaft dabei ist, dass die auf die Kupplungskugel 3 einwirkenden Kräfte auf kurzem Wege in die ersten Befestigungsmittel eingeleitet werden können. Die ersten Befestigungsmittel können insbesondere als Bolzen, als Gewindestifte, als Schrauben und/oder als Klammern ausgebildet sein und in die ersten Befestigungsöffnungen 21 hineinragen, insbesondere von unten hineinragen.

In vorteilhafter Weise kann vorgesehen sein, dass die Flanschplatte 2 zur Montage an einem Träger des Zugfahrzeuges vorgesehen ist. Vorteilhaft dabei ist die einfache, zügige und kraftschlüssige Montierbarkeit der Anhängerkupplung 1 am Zugfahrzeug. Insbesondere kann ein Zugpendel des Zugfahrzeuges den Träger ausbilden. Das Zugpendel kann zwischen den beiden Unterlenkern des Traktors angeordnet sein. Das Zugpendel kann in der ersten Ebene, insbesondere in der horizontalen Ebene, schwenkbar am Zugfahrzeug montiert sein. Das Zugpendel kann Öffnungen zur Befestigung von Befestigungsmitteln, insbesondere Schrauben und/oder Bolzen, aufweisen.

Der Träger kann lösbar am Zugfahrzeug befestigt sein. Derart kann die Anhängerkupplung 1 gemeinsam mit dem Träger vom Zugfahrzeug gelöst werden. Insbesondere kann dies vorgesehen sein, wenn der Träger als das Zugpendel des Zugfahrzeuges ausgebildet ist.

In vorteilhafter Weiterbildung kann vorgesehen sein, dass die Flanschplatte 2 zweite Befestigungsöffnungen 22 zum Fixieren der Flanschplatte 2 mit zweiten Befestigungsmitteln am Träger aufweist. Insbesondere kann vorgesehen sein, dass die Flanschplatte 2 erste und zweite Befestigungsöffnungen 21, 22 aufweist, wobei die zweiten Befestigungsöffnungen 22 zur Kupplungskugel 3 weiter als die ersten Befestigungsöffnungen 21 beabstandet sind. Vorteilhaft dabei ist, dass die Flanschplatte 2 an sämtlichen Enden dieser am vom Zugfahrzeug umfassten Träger befestigt werden kann.

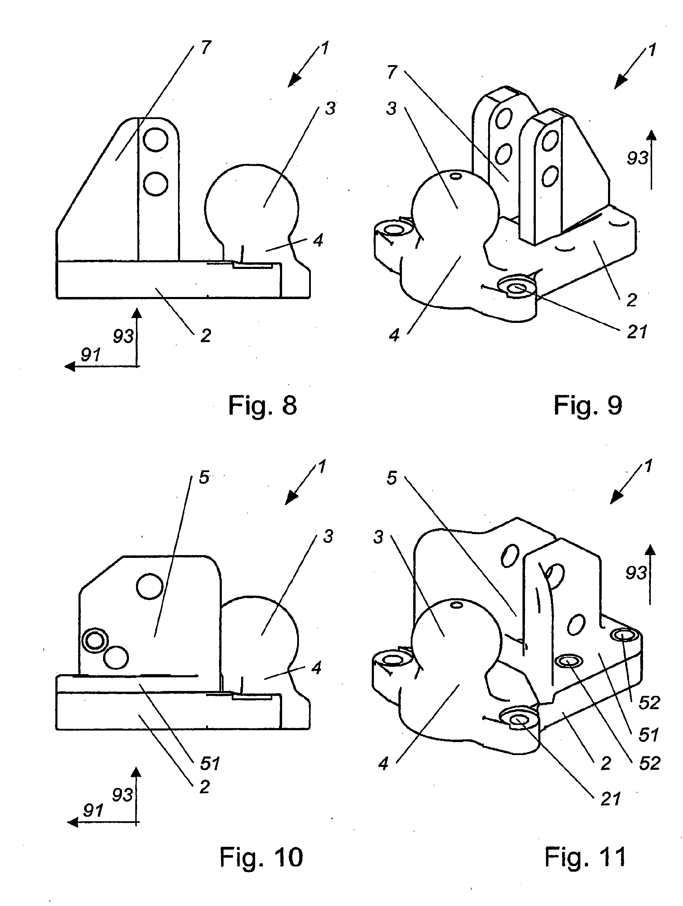

In vorteilhafter Weiterbildung kann vorgesehen sein, dass im Bereich der zweiten Befestigungsöffnungen 22 eine Aufnahme 51 eines Halterungsmoduls 5 eines Niederhalters 6 mit mit den zweiten Befestigungsöffnungen 22 korrespondierenden Öffnungen 52 des Halterungsmoduls 5 angeordnet ist, wobei das Halterungsmodul 5 zusammen mit der Flanschplatte 2 auf dem Träger befestigbar ist. Derart kann die Montage von Anhängerkupplung 1 und Halterungsmoduls 5 besonders einfach und besonders zügig erfolgen. Diese Montage kann derart erfolgen, dass die Anhängerkupplung 1 am Träger aufgesetzt, anschließend das Halterungsmodul 5 an die Anhängerkupplung 1 aufgesetzt und anschließend der Träger, die Anhängerkupplung 1 und das Halterungsmodul 5 miteinander fest verbunden, insbesondere miteinander verschraubt, werden. Vorteilhaft dabei ist die einfache, zuverlässige, schnelle und kraftschlüssige Montierbarkeit von Anhängerkupplung 1 und Halterungsmodul 5 am Träger. Das Halterungsmodul 5 ist in Fig. 7, 10 und 11 abgebildet. In anderer vorteilhafter Weiterbildung kann vorgesehen sein, dass anstatt des Halterungsmoduls 5 eine Halterung 7 des Niederhalters 6 vorgesehen ist. Die Halterung 7 kann anstatt an der Anhängerkupplung 1 unmittelbar am Zugfahrzeug befestigt sein. In anderer Ausbildung kann vorgesehen sein, dass die Halterung 7 mit der Flanschplatte 2 fest, insbesondere unlösbar, verbunden ist. Beispielsweise kann die Halterung 7 mit der Flanschplatte 2 verschweißt sein, welches Verschweißen eine fest unlösbare Verbindung ist. Die feste Verbindung von Halterung 7 und Flanschplatte 2 ist in Fig. 8 und 9 dargestellt.

Zur weiteren Gewichtseinsparung kann vorgesehen sein, dass die Flanschplatte 2 zumindest eine zweite Ausnehmung 24 aufweist. Insbesondere kann die Flanschplatte 2 zwei zweite Ausnehmungen 24 aufweisen, wie dies in Fig. 4 dargestellt ist. Insbesondere kann die zweite Ausnehmung 24 zwischen den zweiten Befestigungsöffnungen 22 angeordnet sein.

## Patentansprüche

1. Anhängerkupplung (1) zur Befestigung an einem Zugfahrzeug mit einer Flanschplatte (2), und einer Kupplungskugel (3), wobei ein die Flanschplatte (2) und die Kupplungskugel (3) verbindender Hals (4) ausgebildet ist, wobei die maximale Erstreckung des Halses (4) in einer ersten Richtung (91) kleiner als in einer zur ersten Richtung (91) normalen zweiten Richtung (92) ist, **dadurch gekennzeichnet, dass** die Flanschplatte (2) benachbart zum Hals (4) eine Vertiefung (20) aufweist, wobei die Vertiefung (20) die Verkippbarkeit einer auf die Kupplungskugel (3) aufgesetzten Kugelzugöse (81) eines anhängerseitigen Kupplungselements (8) vergrößert.

2. Anhängerkupplung nach Anspruch 1, **dadurch gekennzeichnet, dass** der Querschnitt des Halses (4) im Wesentlichen einem Kreisquerschnitt entspricht, bei dem ein Stück weggeschnitten ist.

3. Anhängerkupplung nach Anspruch 2, **dadurch gekennzeichnet, dass** das weggeschnittene Stück des Kreisquerschnittes am in die erste Richtung (91) weisenden Rand (41) des Halses (4) angeordnet ist.

4. Anhängerkupplung nach Anspruch 1, **dadurch gekennzeichnet, dass** der Querschnitt des Halses (4) im Wesentlichen einem Kreisquerschnitt entspricht, bei dem in der zweiten Richtung (92) Anformungen (42) ausgebildet sind.

5. Anhängerkupplung nach einem der Ansprüche 1 bis 4, **dadurch gekennzeichnet, dass** der Hals (4) eine sich zwischen Kupplungskugel (3) und der Flanschplatte (2) erstreckende Halslänge aufweist, und dass die Halslänge kleiner als das 0,6-fache, insbesondere das 0,4-fache, bevorzugt das 0,3-fache, des Durchmessers der Kupplungskugel (3) ist.

6. Anhängerkupplung nach einem der Ansprüche 1 bis 5, **dadurch gekennzeichnet, dass** der Hals (4) lediglich entlang einer dritten Richtung (93) ausgebildet ist, wobei die dritte Richtung (93) sowohl auf die erste Richtung (91) als auch auf die zweite Richtung (92) normal gerichtet ist

7. Anhängerkupplung nach einem der Ansprüche 1 bis 6, **dadurch gekennzeichnet, dass** die Flanschplatte (2), der Hals (4) und die Kupplungskugel (3) einstückig ausgebildet sind.

8. Anhängerkupplung nach einem der Ansprüche 1 bis 7, **dadurch gekennzeichnet, dass** die Flanschplatte (2) in der zweiten Richtung (92) neben dem Hals (4) erste Befestigungsöffnungen (21) zum Zusammenwirken mit nicht über die Flanschplatte (2) in Richtung der Kupplungskugel (3) hinausragenden ersten Befestigungsmitteln aufweist.

9. Anhängerkupplung nach einem der Ansprüche 1 bis 8, **dadurch gekennzeichnet, dass** die Kupplungskugel (3) und der Hals (4) als Gusswerkstoff, insbesondere als Stahlgusswerkstoff, einstückig ausgebildet sind.

10. Anhängerkupplung nach einem der Ansprüche 1 bis 9, **dadurch gekennzeichnet, dass** die Flanschplatte (2) zweite Befestigungsöffnungen (22) zum Fixieren der Flanschplatte (2) mit zweiten Befestigungsmitteln auf einem Träger aufweist.

11. Anhängerkupplung nach Anspruch 10, **dadurch gekennzeichnet, dass** im Bereich der zweiten Befestigungsöffnungen (22) eine Aufnahme (51) eines Halterungsmoduls (5) eines Niederhalters (6) mit mit den zweiten Befestigungsöffnungen (22) korrespondierenden Öffnungen (52) des Halterungsmoduls (5) angeordnet ist, wobei das Halterungsmodul (5) zusammen mit der Flanschplatte (2) auf dem Träger befestigbar ist.

12. Anbängerkupplung nach einem der Ansprüche 1 bis 10, **dadurch gekennzeichnet, dass** mit der Flanschplatte (2) eine Halterung (7) eines Niederhalters (6) fest, insbesondere unlösbar, verbunden ist.

13. Zugfahrzeug mit einer Anhängerkupplung (1) gemäß einem der Ansprüche 1 bis 12.

## Claims

1. A trailer hitch (1) for fixing to a tractor vehicle, comprising a flange plate (2) and a hitch ball (3), wherein a throat (4) is formed which connects the flange plate (2) and the hitch ball (3), wherein the maximum extension of the throat (4) in a first direction is smaller than in a second direction (92) normally to the first direction (91), **characterized in that** the flange plate (2) comprises a depression (20) adjacent to the throat (4), wherein the depression (20) increases the tiltability of a ball drawbar eye (81) of a hitch element (8) on the trailer side, which ball drawbar eye is placed on the hitch ball (3).

2. A trailer hitch according to claim 1, **characterized in that** the cross-section of the throat (4) substantially corresponds to a circular section in which a portion has been cut away.

3. A trailer hitch according to claim 2, **characterized in that** the portion of the circular section that is cut away is arranged at the edge (41) of the throat (4) facing in the first direction (91).

4. A trailer hitch according to claim 1, **characterized in that** the cross-section of the throat (4) substantially corresponds to a circular section in which integral attachments (42) are formed in the second direction.

5. A trailer hitch according to one of the claims 1 to 4, **characterized in that** the throat (4) has a length of the throat extending between the hitch ball (3) and the flange plate (2), and the length of the throat is smaller than 0.6 times, especially 0.4 times, preferably 0.3 times, the diameter of the hitch ball (3).

6. A trailer hitch according to one of the claims 1 to 5, **characterized in that** the throat (4) is merely arranged along a third direction (93), wherein the third direction (93) is directed normally to the first direction (91) and also to the second direction (92).

7. A trailer hitch according to one of the claims 1 to 6, **characterized in that** the flange plate (2), the throat (4) and the hitch ball (3) are integrally arranged.

8. A trailer hitch according to one of the claims 1 to 7, **characterized in that** the flange plate (2), in the second direction (92) adjacent to the throat (4), comprises first fastening openings (21) for cooperation with first fastening means which do not protrude beyond the flange plate (2) in the direction of the hitch ball (3).

9. A trailer hitch according to one of the claims 1 to 8, **characterized in that** the hitch ball (3) and the throat (4) are integrally arranged as a cast material, especially as a steel cast material.

10. A trailer hitch according to one of the claims 1 to 9, **characterized in that** the flange plate (2) comprises second fastening openings (22) for fixing the flange plate (2) with a second fastening means on a carrier.

11. A trailer hitch according to claim 10, **characterized in that** a receiver (51) of a retainer module (5) of a retainer (6) is arranged in the region of the second fastening openings (22) with openings (52) of the retainer module (5) which correspond with the second fastening openings (22), wherein the retainer module (5) can be fixed to the carrier together with the flange plate (2).

12. A trailer hitch according to one of the claims 1 to 10, **characterized in that** a holder (7) of a retainer (6) is rigidly connected, especially in a non-releasable manner, to the flange plate (2).

13. A tractor vehicle with a trailer hitch (1) according to one of the claims 1 to 12.

## Revendications

1. Attelage de remorque (1) destiné à être fixé sur un véhicule tracteur avec une plaque de flasque (2) et une boule d'attelage (3), dans lequel un col (4) reliant la plaque de flasque (2) et la boule d'attelage est formé (3), dans lequel l'étendue maximale du col (4) dans une première direction (91) est plus petite que dans une deuxième direction (92) perpendiculaire à la première direction (91), **caractérisé en ce que** la plaque de flasque (2) présente à proximité du col (4) un renfoncement (20), lequel renfoncement (20) augmente la liberté de basculement d'un oeillet d'attelage (81) d'un élément d'attelage (8) du côté de la remorque qui est posé sur la boule d'attelage (3).

2. Attelage de remorque selon la revendication 1, **caractérisé en ce que** la section du col (4) correspond sensiblement à une section circulaire dont un morceau est coupé.

3. Attelage de remorque selon la revendication 2, **caractérisé en ce que** le morceau coupé de la section circulaire est disposé sur le bord (41) du col (4) orienté dans la première direction (91).

4. Attelage de remorque selon la revendication 1, **caractérisé en ce que** la section du col (4) correspond sensiblement à une section circulaire dans laquelle des éléments en forme (42) sont formés dans la deuxième direction (92).

5. Attelage de remorque selon l'une des revendications 1 à 4, **caractérisé en ce que** le col (4) présente une longueur de col qui s'étend entre la boule d'attelage (3) et la plaque de flasque (2) et **en ce que** la longueur de col est inférieure à 0,6 fois, en particulier 0,4 fois, de préférence 0,3 fois le diamètre de la boule d'attelage (3).

6. Attelage de remorque selon l'une des revendications 1 à 5, **caractérisé en ce que** le col (4) est formé seulement le long d'une troisième direction (93), la troisième direction (93) étant orientée perpendiculairement à la première direction (91) aussi bien qu'à la deuxième direction (92).

7. Attelage de remorque selon l'une des revendications 1 à 6, **caractérisé en ce que** la plaque de flasque (2), le col (4) et la boule d'attelage (3) sont formés d'une seul pièce.

8. Attelage de remorque selon l'une des revendications 1 à 7, **caractérisé en ce que** la plaque de flasque (2) présente dans la deuxième direction (92) à côté du col (4) des premières ouvertures de fixation (21) destinées à coopérer avec des premiers moyens de fixation qui ne dépassent pas au-delà de la plaque de flasque (2) dans la direction de la boule d'attelage (3).

9. Attelage de remorque selon l'une des revendications 1 à 8, **caractérisé en ce que** la boule d'attelage (3) et le col (4) sont conformés d'une seule pièce comme un matériau moulé, en particulier comme un acier moulé.

10. Attelage de remorque selon l'une des revendications 1 à 9, **caractérisé en ce que** la plaque de flasque (2) présente des deuxièmes ouvertures de fixation (22) pour fixer la plaque de flasque (2) avec des deuxièmes moyens de fixation sur un support.

11. Attelage de remorque selon la revendication 10, **caractérisé en ce qu'**il est prévu au niveau des deuxièmes ouvertures de fixation (22) un réceptacle (51) d'un module de fixation (5) d'un dispositif de maintien (6) avec des ouvertures (52) du module de fixation (5) correspondant aux deuxièmes ouvertures de fixation (22), lequel module de fixation (5) peut être fixé sur le support avec la plaque de flasque (2).

12. Attelage de remorque selon l'une des revendications 1 à 10, **caractérisé en ce qu'**une fixation (7) d'un élément de maintien (6) est reliée de façon fixe, en particulier indissociable, avec la plaque de flasque (2).

13. Véhicule tracteur avec un attelage de remorque (1) selon l'une des revendications 1 à 12.
